# EUROPEAN PATENT APPLICATION

(11) **EP 2 860 731 A1**
(43) Date of publication of application: **15.04.2015**
(21) Application number: 13306404.8
(22) Date of filing: 14.10.2013
(51) Int. Cl.: G11B 27/00, G11B 27/034, G11B 27/036

(54) **Movie project scrutineer**

(71) Applicant: Thomson Licensing, 92130 Issy-les-Moulineaux (FR)
(72) Inventor: Mischler, Denis, 35576 Cesson-Sévigné (FR); Eluard, Marc, 35576 Cesson-Sévigné (FR); Dore, Renaud, 35576 Cesson-Sévigné (FR); Maetz, Yves, 35576 Cesson-Sévigné (FR); Gendrot, Rémy, 35576 Cesson-Sévigné (FR)
(74) Representative: Huchet, Anne

(57) **Abstract**

The invention relates to a method for creating, with processing means, representation data of at least one component of a movie.

According to the invention said method comprises following steps:
- processing at least one piece of information representing a division of said movie, delivering a scale of representation of said movie;
- obtaining data representing one component of said movie, called component data;
- associating at least one part of said component data to at least one portion of said scale of representation of said movie, delivering representation data.

## Description

### 1. DOMAIN OF THE INVENTION

The invention relates to movie production. More specifically, the invention relates to data processing and data management for movie production. An object of the proposed technique is to allow obtaining consistent and usable data for easing the management of movie projects.

### 2. PRIOR ART SOLUTIONS

Movie projects are for now developed and conducted by a group of persons including "production managers", "executive producers" and "directors" who are responsible for coordination of all the tasks and activities related to the production until the final content is delivered. The roles of these persons are:
- to supervise coordination during the steps of the production;
- to ensure an efficient relationship between the script and the production process;
- to ensure recruitment of actors and all kind of workers needed for the production of the content, whether it is live shooting or other utilization of new digital technologies to create animated images;
- to build the timesheets for the workers;
- to follow the overall progress of the project and ensure consistence of the final result.

For supervising and knowing the evolution of the production, a common tool largely used today is a video editing tool based on a time line referring only to the final time code of the movie. Only at the very end of the production is there a pre-visualization in real conditions to check the overall final quality of the project. Thus, there is no tool nor means for having a synthetic and synchronized view of the elements used during the different steps of the project. This is problematic since it can be impossible to determine if mistakes and other problematic issues are present in the project until the project is almost ended. It is not possible, for example, to determine if dramaturgy rules are in accordance with music or in accordance with scene division or scene reordering during the edition stage. The need for this management and control easiness is especially relevant in context of the emerging filmmaking industry where movies will be more and more done by small teams instead of a large set of very precise skilled and role-based individuals.

The components that are involved in the design and development of a movie follow different life cycle along with different timelines or constraints. Taken separately, the problem is quite easy to solve. But it is complicated to compare several components simultaneously. However, this comparison is needed for analyzing and verifying the coherence and consistency of what is created. In this case, only a skilled professional, using his experience, can have a general and usually vague idea of the evolution of the movie by constructing synthetic views of two or three components simultaneously. Tools are able to provide an overview of some of these components, but different views are not compatible with each other.

Thus, there is a need for a tool that is able to inform the project managers of such issues or problems between the various components which are combined to obtain a movie.

### 3. PRESENTATION OF THE INVENTION

The invention overcomes the drawbacks of the prior art.

More specifically, the invention relates to a method for creating representation data, as claimed in claim 1, and a device as claimed in claim 8.

According to another aspect, the proposed technique pertains to a computer program product, as claimed in claim 9, downloadable from a communications network and/or stored on a computer-readable support and/or executable by a microprocessor. According to the invention, such a program comprises program code instructions to execute the method for creating representation data as described here above.

### 4. DRAWINGS

The proposed method is described in the following by way of examples in connection with the accompanying figures without limiting the scope of the protection as defined by the claim in which:
- Figure 1 illustrates the main features of the proposed technique;
- Figure 2 illustrate a view of several components obtained from component data according to the proposed technique;
- Figure 3 illustrate a simplified embodiment of a device for creating representation data.

### 5. DETAILED DESCRIPTION OF THE INVENTION

### 5.1 Principles of the invention

The proposed technique comprises processing and organizing data for optimizing their use by persons in charge of managing movie projects. More specifically, the proposed technique allows obtaining a synthetic and synchronized representation of various components on different elements involved in the creation of a movie, by means of data processing modules adapted to process data in function of some classes to which the components of the movie belong. The different components do not necessarily all respect the same timeline and may refer to orthogonal components such as music mood, dramaturgy rules and dialogs.

All these components are related to information which are extracted or calculated with data algorithms implemented in data processing modules. As already seen, there is no prior art tool nor means for having a synthetic and synchronized view of the overall component used during the different steps of the project.

"Synthetic view" refers to the possibility to access from a single document relevant information regarding the different dimensions such as script, actors, locations, props, amount of action, music, dramaturgy rules, etc. "Synchronized view" refers to the capability to represent this information with a unique and common reference (which may be a timeline or any suitable reference, including data coming from another component).

One constraint at the basis of the proposed technique is to manage the components as they are, i.e. defined independently from each other. This is how creation works, and for example, composite music which are used in a movie four creating motion picture sound tracks are rarely made along with the shooting of the movie. However, once some components are defined, it is interesting to have a representation, understandable and usable by those who are responsible for the creation of the movie. Such a representation is preferably able to present point of a view as different as: music mood, dramaturgy rules, dialogs, props. The representation is made by using representation data.

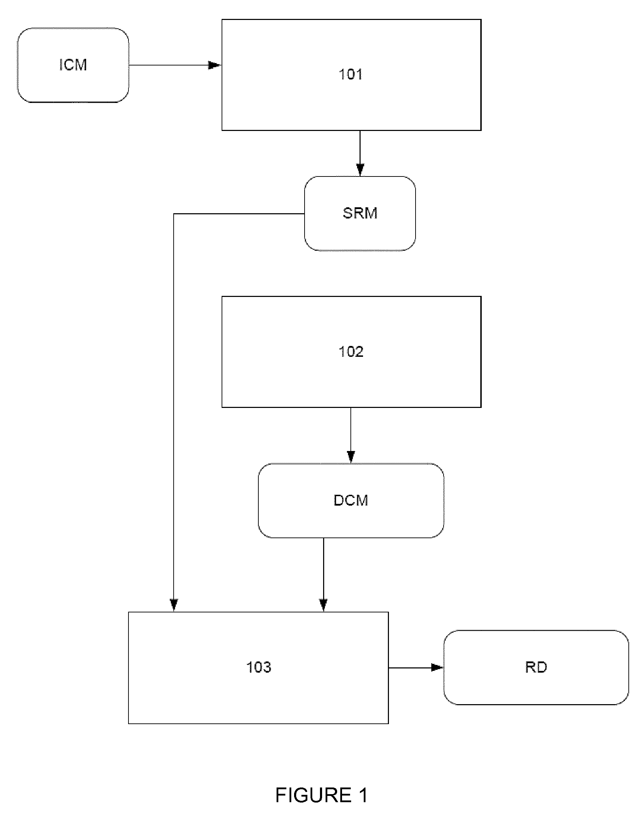

More specifically, in a general embodiment, presented in relation with figure 1, the proposed technique comprises the following steps:
- processing (101) at least one piece of information representing a division of said movie (ICM), delivering a scale of representation of said movie (SRM);
- obtaining (102) data representing one component of said movie, called component data (DCM);
- associating (103) at least one part of said component data (DCM) to at least one portion of said scale of representation of said movie (SRM), delivering representation data (RD).

According to this general embodiment, the scale of representation of the movie (SRM) can be based on the time. It can be an orthonormal scale, in which each division point is independent of the time length of the portion. It can also be an orthogonal scale, in which the length of the portion on the scale depends of the real length (in time) of the portion. Basically, It can also be a scale with a regularly space graduation. When the scale of representation of the movie (SRM) is not time based (but other information representing division of the movie, for example indoor/outdoor), the scale of representation of the movie may have another characteristic, like a binary scale. In such a case, the duration of the movie is considered as being a component among other components of the movie.

In a second step, component data are obtained. They can be obtained either in an exploitable form (i.e. directly adapted to be associated to the scale) or in a raw form. In the latter case, the associating step comprises a data normalization step in which raw component data are transformed and/or normalized in view of the given scale. The result of the association is representation data, which can be used for representing the movie along with the given component. Of course, when several components are usable, the method comprises obtaining the usable components data and associating the usable components data for obtaining the representation data.

According to a specific embodiment, the proposed method comprises a step of processing said component data in function of at least one representation parameter. In such a case, the previous data normalization step can be included in this processing step.

Thus, thanks to the proposed technique, it is possible to have, in a single data stream, combined and relevant information on the constraints of the movie. For example, to obtain the information on the constraints associated to the presence of the actors in function of the scenes of the scripts and in function of the location of the scene, even if the given actor is "voice over".

According to a specific embodiment of the disclosed method, the scale of representation of the movie can be changed, in function of the point of view that the user wants to use. Thus, for example, the scale can be based on the presence of a specific actor.

As will be described hereinafter, components that may be processed according to the proposed technique belong to the group comprising:
- dramaturgy;
- intensity of action;
- time;
- music;
- location;
- character;
- dialog.

Many other components may be included such as props component, defining the use of props during the movie. This may have importance, for example, if a given prop has a key role into the movie. Thus, having information about the presence of such an prop may be necessary.

In the following, a specific embodiment of the proposed method is disclosed. It is understood that this specific embodiment is not limitative and that for example the algorithms which are applied to specific component data are just examples of how component data can be processed.

### 5.2 Description of an embodiment

In this embodiment, the scale of representation of said movie (SRM) is time based. More specifically, in this embodiment, the step of processing at least one piece of information representing a division of said movie comprises the following steps:
- obtaining data representing a script of said movie, called movie script data; these data are obtained for example in a script file (i.e. a text file or a PDF file, or the like). The file is stored on a support or obtained from a network;
- parsing said movie script data, delivering a set of progression units of said movie; the parsing can be done by a parser, wherein said parser has access to rules for parsing movie script data. The units of progression which are obtained may be scene (with a real or estimated time) or shots; as the proposed method may also be applied to video clip or commercials, the progression unit may change in view of the type of script;
- obtaining an estimation of a duration of said movie; the duration of the movie may be obtained either through the parsing step or by another channel (this is the case for example when the method is applied in an advance phase of production of the movie);
- generating a timeline in view of said duration of said movie;
- associating at least one progression unit of said set of progression units to at least one point of said timeline, delivering said scale of representation of said movie; this association step allows mapping the representation unit on the timeline.

Once the scale of representation of the movie is obtained, components data can be associated to this scale of representation.

Among the various components which can be used for obtaining component data, there are music, dramaturgy, location, character, dialog, flashback, etc.

A simple component is for example related to the indication of the indoor or outdoor state (this is what is called indicator component). In the movie, some progression units are situated indoor while other progression units are situated outdoor. Thus, typical component data for this indicator component would be structured data comprising an indicator (in/out) and/or a time related to a change and/or duration, representing time where the movie is either outdoor or indoor.

The next step, in this embodiment, is to display representation data. At this stage, many displaying options are available. A basic option consists in displaying data in a uniform representation style, like for example a colored bar.

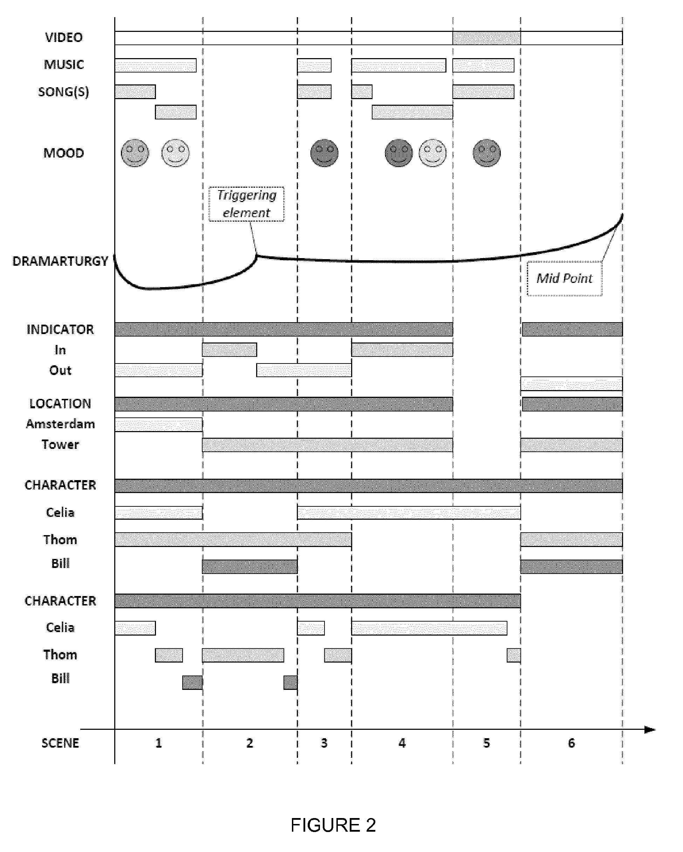

As exposed in figure 2, the scale of representation of the movie is placed on the horizontal axis of an orthogonal system of axes. The selected timeline for the synchronization of points of components is defined by the scenes present in the movie and their time on the screen. For a movie with a length of one hour and thirty minutes, this time is commonly divided between about eighty scenes. All components are synchronized on that timeline.

On the vertical axis, the component data are displayed by using at least one line per component. For a specific component, several lines may be used: this is for example the case for the character component, when several characters are involved in a representation unit (for example a scene).

More sophisticated display options are available. The point is that displaying data is an important point for providing a good understanding of the synchronized components along with the progression unit.

For displaying component data in an understandable way, the proposed method comprises processing component data as a function of at least one representation parameter. The representation parameter belongs to a component display class belonging to the group comprising:
- boolean class;
- bar class;
- variable over a discrete number of values class;
- progression class.

In function of a type associated to the component, several parameters may be used. For example, for the indicator component, data can be displayed using bars: in such a case a line is associated to "outdoor" and a line is associated to indoor. A bar is drawn on the outdoor line when the progression unit is synchronized with an outdoor state. A bar is drawn on the indoor line when the progression unit is synchronized with an indoor state. In another embodiment, a single line is associated to the component: a specific color is associated to indoor and another specific color is associated to outdoor.

According to a specific embodiment, said step of processing said component data in function of the representation parameter comprises the following steps:
- obtaining the representation parameter; this parameter is associated to component data to process;
- obtaining the component display class associated to the representation parameter; this class may be recorded in a database or a configuration file;
- parsing the component data in function of a portion of the scale of the representation of the movie, delivering scaled component data; in this step, component data are synchronized for example with the timeline of the representation unit;
- calculating component representation data, in function of the scaled component data and in function of the component display class associated to said representation parameter. The calculation is made in view of the structure of the data. The representation data is for example a bar or a succession of icons, thumbnails or smileys.

The disclosed method can be applied successively to several component data for providing a complete set of component data to display in a global view: this view shows the result of the project, i.e. the current state of the movie or the finished movie.

### 5.3 Component Data

- Music: this component includes different sub-components; among these sub-components are :
   ○ the presence or absence of music, the number of different songs and for each of them, the mood which emerges from the song. This last sub-component requires a suitable prior art algorithm to compute the mood for a song. This is done by a music processing module. It is then for example possible to see if two songs used in the same scene are consistent or to see if the mood reflected in the songs matches the dramaturgy required in a scene.
   ○ for each piece of music, it is possible to display the duration time in the scene and the global component corresponding to the sum of each piece of music. The mood can be displayed with an icon or by coloring the duration time of the corresponding music.
- Dramaturgy: this component comprises a description of dramaturgical rules that could be applied to the movie (for example the rules of Robert McKee). This can be done for example by explicit references to well defined states of progression of a given traditional dramaturgy, should the whole sequence of those references being exhaustive or not (in case of bypass) as regards to the total number of recommended existing states in the dramaturgy, and should the whole reference sequence comply or not (in case of small reordering) with the recommended sequence order in this dramaturgy. These rules could be synchronized with the video and the script, to help verifying their compliance or not.
   ○ In a first embodiment, the user may indicate if a scene has a particular property within the meaning of dramaturgy rules which allow global mapping on the dramaturgy rules.
   ○ In a more sophisticated version, those rules could be deduced automatically with the script or the video, by using a semantic processing module.
   ○ Data of this component are processed for obtaining a progression according to the dramaturgy rules.
- Location: this component is related to shooting locations. By synchronizing with the dialog and character components, it is possible to verify that there is no error with the absence or presence of some important characters in the weaving of the progression unit (a scene), for example. Generally, a scene can only be in one place, this one location. Data from this component can be processed in various manners, by a location processing module using at least one representation parameter, for example like binaries values which can be displayed with an icon or a bar. It can also be processed by indicating the location in a bar.
- Indicator: As already presented, this component provides information about whether the progression unit takes place indoors, outdoors or both. By correlating it with the location component data, it become possible to check the consistency of the scene. For Example, a scene in streets of Amsterdam necessarily takes place outside and a scene that is both inside and outside must have at least two locations. Data from this component can be processed, by an indicator processing module using at least one representation parameter, in various manners, for example like binary values which can be displayed with an icon or a bar.
- Character: this component relates to actors or other bodies or groups of silhouettes or supernumerary needed during shooting. Data from this component can be processed in various manners, for example like binary values which can be displayed with an icon or a bar to indicate the presence or absence of one or several characters. According to a specific embodiment, a component is associated with one character. In this case, processing of characters components may include a step of merging various single characters components in a combined component data. Data from this component can be processed, by a character processing module using at least one representation parameter, in various manners, for example like faces thumbnails representing the character, or colored bar, etc.
- Dialog: this component presents actors and extras having at least one line in the scene. This dialog component, correlated with dialog (of the script) allows checking whether the actors are present for their dialogs or if there is a voiceover. Combined with dramaturgy component data, it is possible to check that the key characters are present at the important moment of the story. In a specific embodiment, dialog component data can be synchronized on the scale by dividing the duration time of the progression unit (for example the scene) by the number of words pronounced during it by all actors. Thus, each actor can be allocated a cumulative time that is proportional to the number of words pronounced. An alternative to the cumulative time is to consider the division of dialogues in the scene to represent the changing of speakers with time estimation for each repartee. Data from this component can be processed, by a dialog processing module using at least one representation parameter, in various manners as previously presented.
- Time: this component presents the time progression within the narrative, and may exhibit linearity as regards to the progression unit scale - a slope of 1 where the movie time progresses exactly as the story time or a different and typically accelerated speed as regards the story time - , or piecewise linearity in case of flashbacks. It may be also undetermined, either because there is no strict time relationship between scenes not linked by cause-to-fact rules, or because it is made purposely ambiguous. Data from this component may be processed by a script processing module tracking for explicit time reference of the story or estimating story time acceleration between successive scenes or shots from the bare script or the annotated script, and / or manually added by a director. Data of this component can be represented by a progression. A specific function (for example a polynomial function comprising variable corresponding to the ones extracted by the processing module can be used for displaying action intensity).
- Action intensity: this component exhibits the number of events - physical or psychological - per time unit, a sequence of scenes with intense action being a period of the movie time where a lot is happening. Data from this component may be processed by a script processing module tracking for the density of action verbs, interjection words in dialog, or more advanced semantic module analysis of the dialog. Data of this component can be represented by a progression. A specific function (for example a polynomial function comprising variable corresponding to the ones extracted by the processing module can be used for displaying action intensity).

Various processing and representation parameters for component data can be added or changed.

### 5.4 Related devices

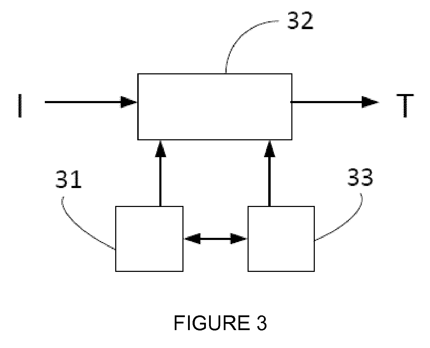

Referring to figure 3, it is presented an embodiment of a creating device according to the proposed technique. Such a device may for example be an application server implementing one or more web services and/or be a single device linked or not to a camera and/or a single material server in a communication network, which may interact with other communications network servers.

Such a device has a memory 31 consisting of a buffer memory, a processing unit 32, equipped for example with a microprocessor and driven by the computer program 33 implementing at least certain steps of the rendering method according to the invention.

At initialization, the code instructions of the computer program 32 are for example loaded into a RAM and then executed by a processor of the processing unit 32. The processing unit 32 inputs at least one piece of information I, such as script, component data, duration of the movie. The microprocessor of the processing unit 32 implements at least some of the steps of the method described here above, according to the instructions of the computer program 33, to deliver a piece of processed information T, such as representation data. To this end, the device comprises, in addition to the buffer memory 31, means for obtaining the script, component data (e.g. one or more interfaces), means for processing component data (e.g. dedicated video processor or mutualized video processing components or processing modules, in hardware or software embodiment).

These means are for example driven by the microprocessor of the processing unit 32 or by dedicated means like ASIC processors, specific devices or components. The device may also include several dedicated processing units or processing modules which may be implemented directly in the device or used via a communication network. When processing modules are used over a network, the device comprises interfaces for transmitting component data to the network and for receiving processed component data.

## Claims

1. Method for creating, with processing means (32), representation data of at least one component of a movie, **characterized in that** it comprises following steps:
- processing (101) at least one piece of information representing a division of said movie, delivering a scale of representation of said movie;
- obtaining (102) data representing one component of said movie, called component data;
- associating (103) at least one part of said component data to at least one portion of said scale of representation of said movie to obtain the representation data.

2. Method according to claim 1, **characterized in that** said step of processing at least one piece of information representing a division of said movie comprises the following steps:
- obtaining data representing a script of said movie, called movie script data;
- parsing said movie script data, delivering a set of progression units of said movie;
- obtaining an estimation of a duration of said movie;
- generating a timeline in view of said duration of said movie;
- associating at least one scene of said set of progression units to at least one point of said timeline to obtain said scale of representation of said movie.

3. Method according to claim 1, **characterized in that** it comprises displaying said representation data, along with said scale of representation of said duration of said movie.

4. Method according to claim 1, **characterized in that** it comprises processing said component data in function of at least one representation parameter.

5. Method according to claim 4, **characterized in that** said representation parameter belongs to a component display class belonging to the group comprising:
- boolean class;
- bar class;
- variable over a discrete number of values class;
- progression class.

6. Method according to claim 1, **characterized in that** said component data belong to the group comprising:
- dramaturgy component data;
- intensity of action component data;
- time component data;
- music component data;
- indicator component data;
- location component data;
- character component data;
- dialog component data.

7. Method according to claim 5, **characterized in that** said step of processing said component data in function of at least one representation parameter comprises the following steps:
- obtaining said representation parameter;
- obtaining said component display class associated to said representation parameter;
- parsing said component data in function of said at least one portion of said scale of representation of said movie; delivering scaled component data;
- calculating component representation data, in function of said scaled component data and in function of said component display class associated to said representation parameter.

8. Device for creating, representation data of at least one component of a movie, **characterized in that** it comprises means for:
- processing at least one piece of information representing a division of said movie, delivering a scale of representation of said movie;
- obtaining data representing one component of said movie, called component data;
- associating at least one part of said component data to at least one portion of said scale of representation of said movie, delivering representation data.

9. Computer program product downloadable from a communications network and/or stored in a computer-readable carrier and/or executable by a microprocessor, **characterized in that** it comprises program code instructions for the execution of the method for creating representation data according to at least one of the claims 1 to 7, when it is executed on a computer.
